Europäisches Patentamt

European Patent Office

Office européen des brevets

(11) Numéro de publication: **0 435 793 B1**

(12) **FASCICULE DE BREVET EUROPEEN**

(45) Date de publication de fascicule du brevet: **07.12.94**  (51) Int. Cl.⁵: **B60R 1/08**

(21) Numéro de dépôt: **90420570.5**

(22) Date de dépôt: **24.12.90**

(54) **Rétroviseur notamment pour véhicules automobile.**

(30) Priorité: **22.12.89 FR 8917075**
**28.09.90 FR 9012215**

(43) Date de publication de la demande:
**03.07.91 Bulletin 91/27**

(45) Mention de la délivrance du brevet:
**07.12.94 Bulletin 94/49**

(84) Etats contractants désignés:
**CH DE ES FR GB IT LI SE**

(56) Documents cités:
**EP-A- 0 313 216      WO-A-85/05191**
**FR-A- 1 420 532      FR-A- 2 629 027**
**US-A- 4 012 125      US-A- 4 258 979**
**US-A- 4 436 372**

(73) Titulaire: **Burgat, René**
**Route de la Fontaine**
**F-01460 Nurieux-Volognat (FR)**

(72) Inventeur: **Burgat, René**
**Route de la Fontaine**
**F-01460 Nurieux-Volognat (FR)**

Rank Xerox (UK) Business Services
(3.10/3.09/3.3.3)

EP 0 435 793 B1

## Description

L'invention conçerne un rétroviseur de véhicule automobile.

Ca disposition a pour but de permettre la réalisation de rétroviseurs oui soit affectés chacun à un type de véhicules et à un côté de ces véhicules oui permettent d'assurer une rétrovision des zones proches ainsi que des zones lointaines. Ainsi, le rétroviseur prévu pour camions semi-remorque côté passager qui a la particularité de remplir, sans transition, les fonctions du rétroviseur normal dans sa partie supérieure, de grand angle dans sa partie intermédiaire et d'accostage dans sa partie inférieure, à son champ de vision dirigé verticalement au sol à son aplomb.

Le rétroviseur de l'invention est caractérisé en ce qu'il est réalisé par une partie d'un miroir constituant une surface de révolution dont la génératrice présente une courbure oui augmente depuis le centre de cette surface de révolution et vers sa périphérie, cette partie de miroir étant délimitée à proximité d'au moins deux de ses bords et de préférence sur ces deux bords par une génératrice de cette surface de révolution, cette génératrice étant constituée par une courbe plane.

Rétroviseur côté conducteur : la génératrice de la surface de révolution doit s'établir à partir d'un ensemble de points par lesquels passe une succession d'arcs distants d'un pas (P) de 30 mm et dont les rayons de courbure obéissent à la relation $R = H.K_n$ avec $H = 3822$ mm et $K_n$ variant de $1/1,15$ à $1/1,134$, ces valeurs étant admises à 10 % près.

Rétroviseur côté passager : que la génératrice de la surface de révolution doit s'établir à partir d'un ensemble de points par lesquels passent une succession d'arcs distants d'un pas (P) de 30 mm et dont les rayons de courbure obéissent à la relation $R = H.K_n$ avec $H = 2348$ mm et $K_n$ variant de $1/1,15$ à $1/1,07$, ces valeurs étant admises à 10 % près.

La presente invention se raportte à rétroviseur de véhicule automobile disposé soit du côté conducteur soit du côté passager tel que défini par les revendications 1 et 2

Suivant une autre caractéristique de l'invention pour tous les miroirs : le coefficient variable module sa courbure améliorant leurs fonctions.

Suivant une autre caractéristique de l'invention pour les miroirs côté passager : l'ordre établi des coefficients est inversé.

Suivant une autre caractéristique de l'invention, tous les miroirs prévus sont commun du miroir pour voiture légère.

L'invention est représentée à titre d'exemple non limitatif sur les dessins ci-joints dans lesquels :

- la figure 1 est une vue illustrant la surface de révolution servant de base à la détermination de la forme du miroir du rétroviseur de l'invention ;
- la figure 2 est une vue de dessous de la figure 1 ;
- la figure 3 illustre le mode de détermination de la courbe de génération à courbure progressive de la surface de révolution de la figure 1 ;
- la figure 4 est une vue en perspective d'une partie de la surface de révolution illustrant la courbure de cette surface pour un rétroviseur de gauche, d'un véhicule à poste de conduite à gauche ;
- la figure 6 est une vue en coupe illustrant la courbe génératrice de la surface de révolution des miroirs côté conducteur ;

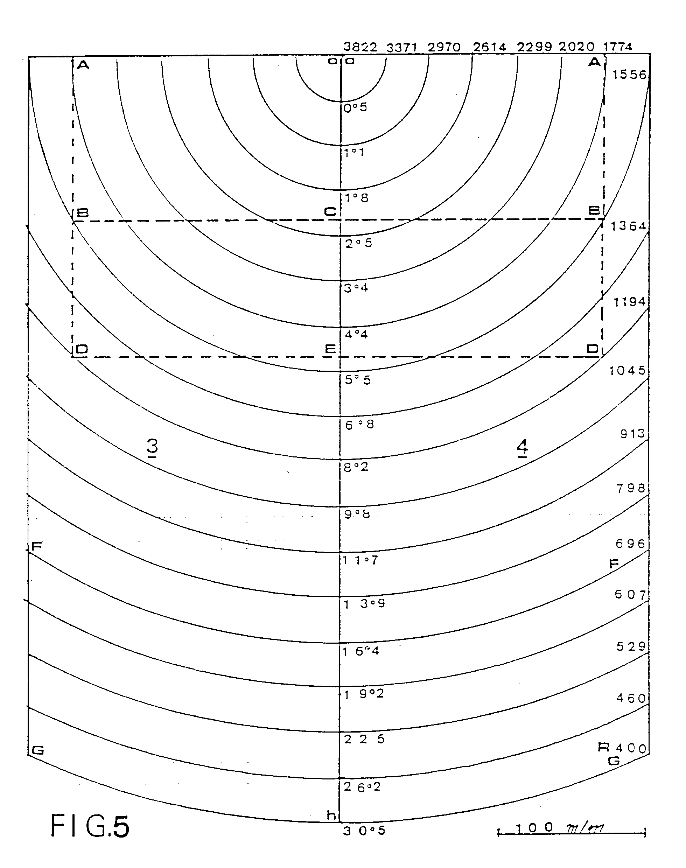

- la figure 5 est une vue de dessus des parties 3 et 4 de la surface de révolution, illustrant le découpage dans le plan de chaque miroir de rétroviseur pour tous les véhicules côté conducteur : la partie 3 pour tous les véhicules ayant le poste de conduite à gauche, la partie 4 pour tous les véhicules ayant le poste de conduite à droite ;

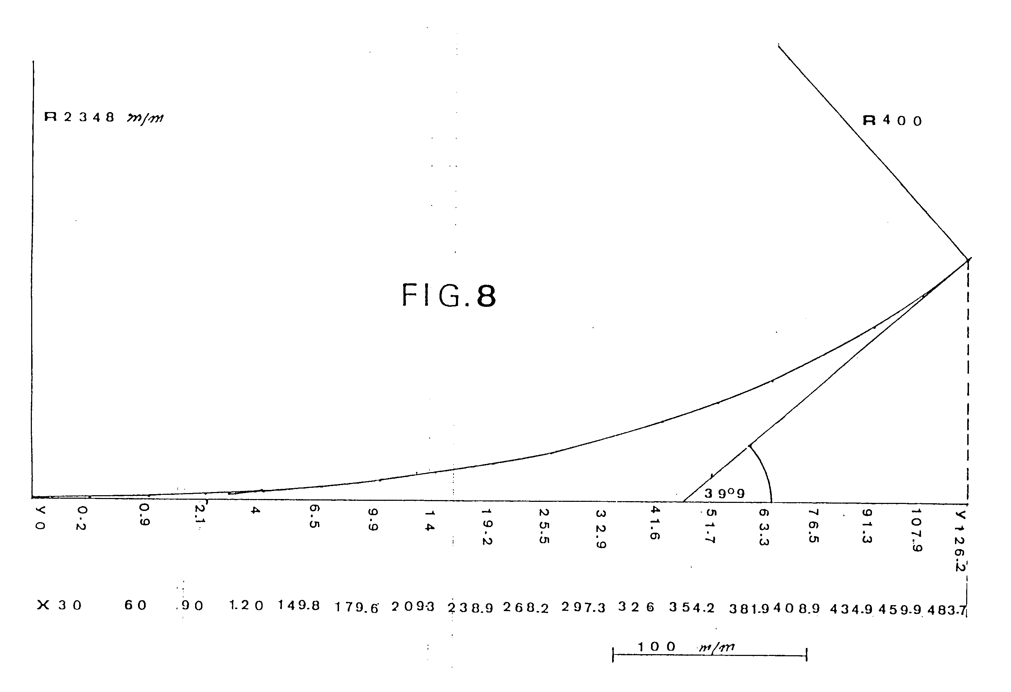

- la figure 8 est une vue en coupe illustrant la courbe génératrice de la surface de révolution des miroirs côté passager ;

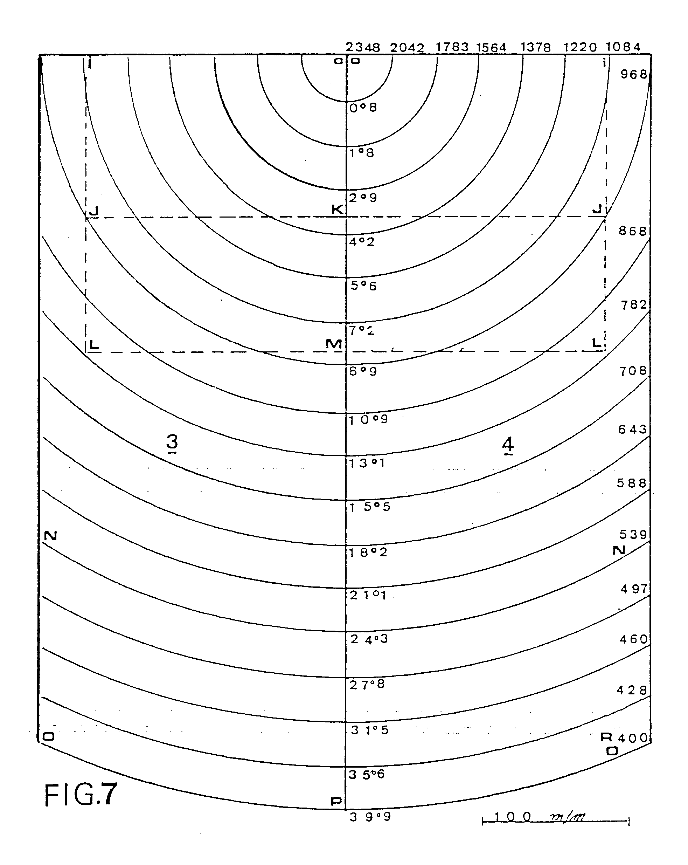

- la figure 7 est une vue de dessus des parties 3 et 4 de la surface de révolution illustrant le découpage dans le plan de chaque miroir de rétroviseur pour tous les véhicules côté passager : la partie 4 pour tous les véhicules ayant le poste de conduite à gauche, la partie 3 pour tous les véhicules ayant le poste de conduite à droite ;

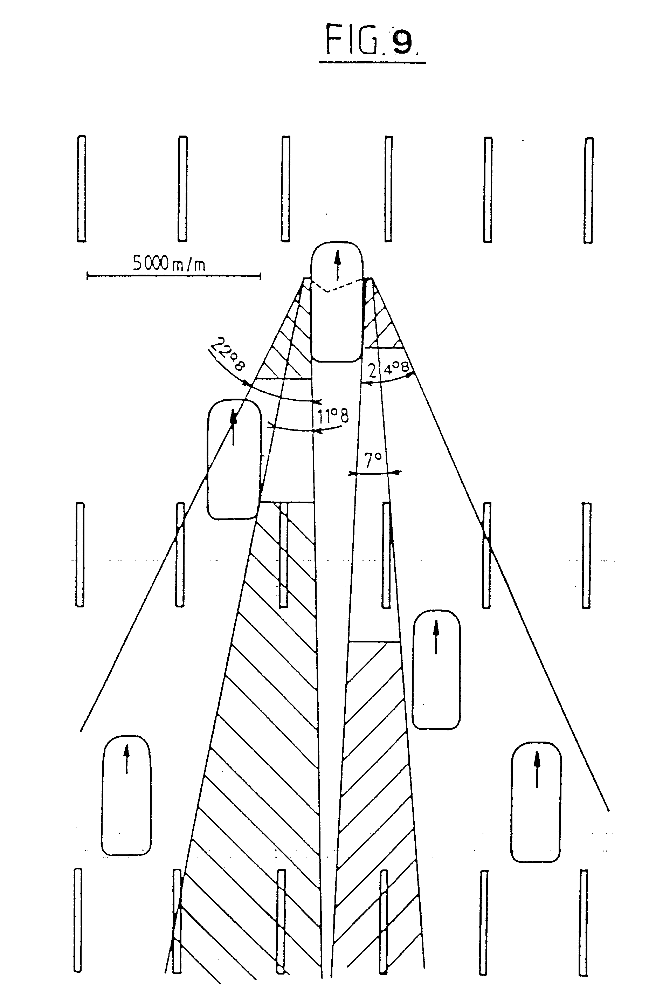

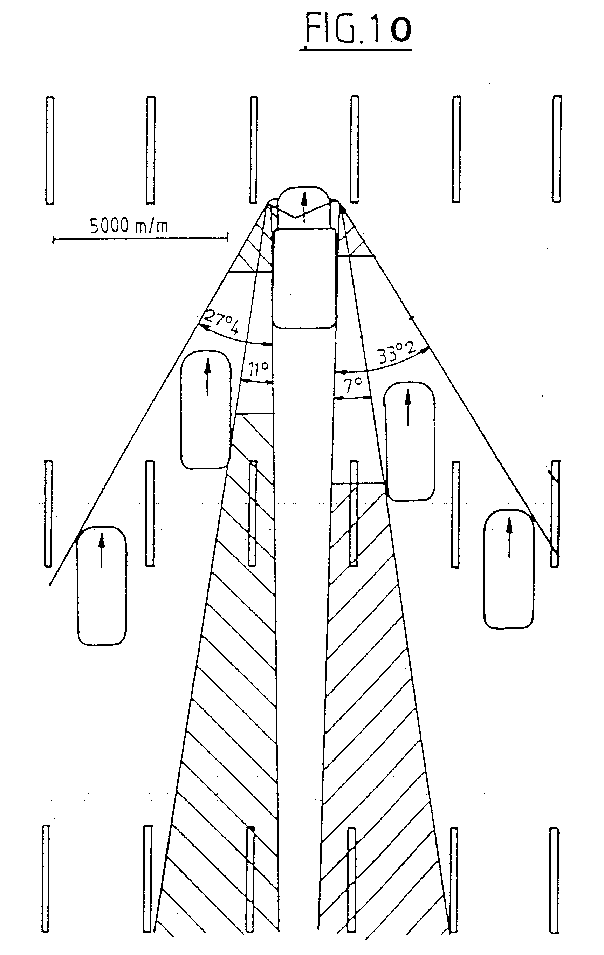

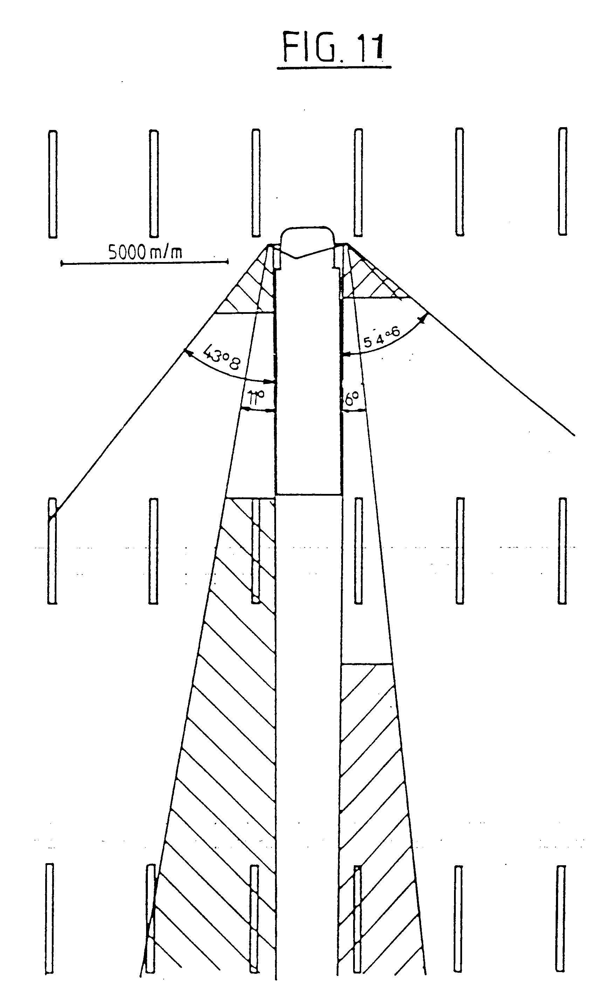

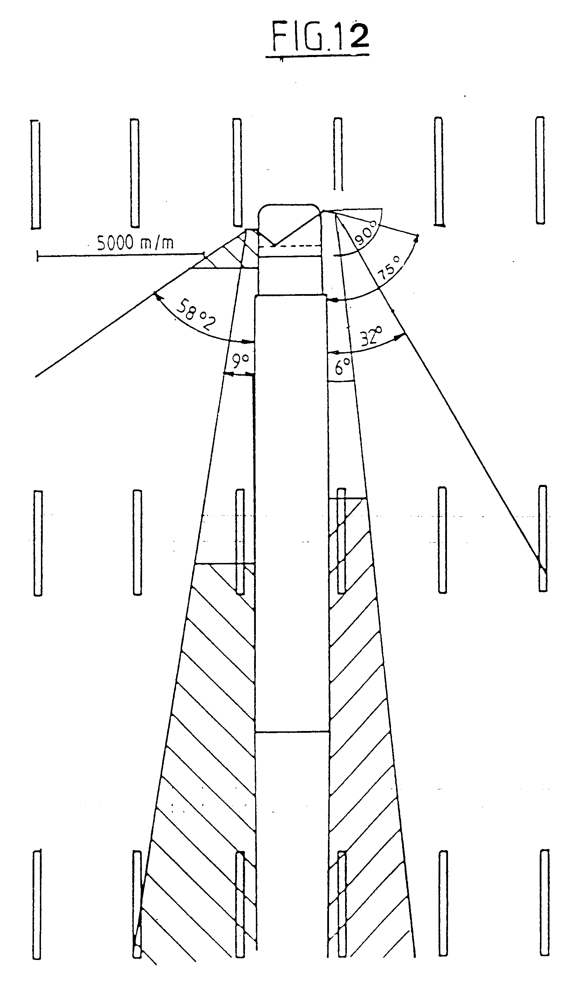

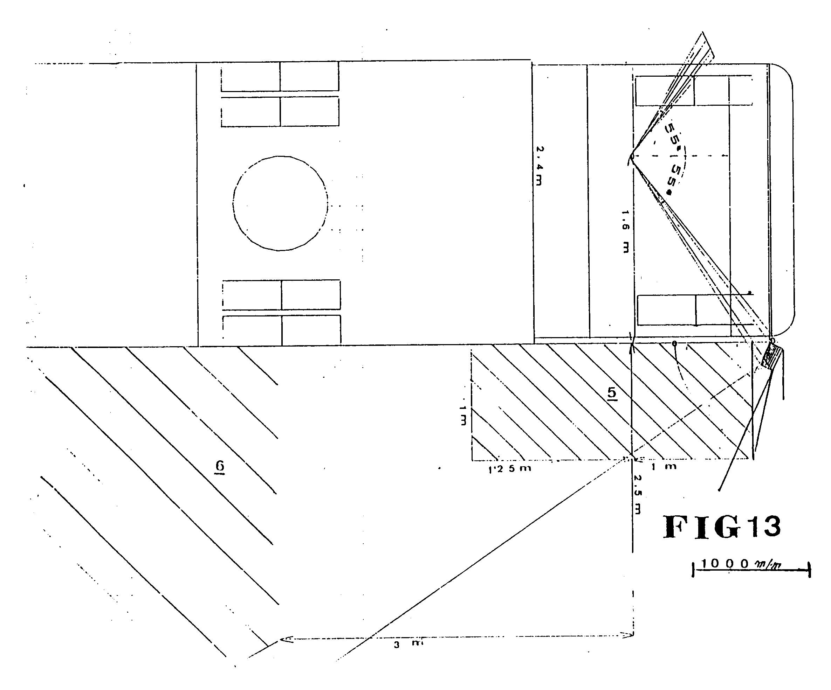

- les figures 9, 10, 11 et 12 illustrent les angles de rétrovision obtenus par les rétroviseurs de l'invention, tels qu'ils sont représentés sur les figures de 4 à 8, pour le côté gauche et pour le côté droit d'un véhicule dans le cas d'un véhicule constitué par une voiture de tourisme (figure 9), par une camionnette (figure 10), par un camion avec ou sans remorque (figure 11) et par un véhicule semi-remorque (figure 12 et 13)
- la figure 13 est une vue de dessus d'un camion semi-remorque illustrant en détail les angles de rétrovision obtenus, représentés par les fugures 7 et 8.

La présente invention a en conséquence pour but la réalisation d'un rétroviseur présentant sous une forme simplifiée un angle de rétrovision important, dans lequel l'image réfléchie est rectiligne tant dans ses dimensions horizontales que verticales, ce rétroviseur permettant en outre une meilleure estimation des distances et une meilleure appréciation de la vitesse de rapprochement d'un véhicule suiveur, dans la mesure où la zone utile de surveillance de la circulation suit, d'une manière générale, la diagonale du rétroviseur depuis l'angle du point 0 à l'angle opposé B-D et O-J-L.

Le rétroviseur selon le préambule des revendications indépendantes est connu du document FR-A- 1420532 oui décrit un rétroviseur réalisé par une partie d'un miroir constituant une surface de révolution, cette partie de miroir étant délimitée a proximité de deux de ses bords adjacents perpendiculaires entre eux par une génératrice (b) de cette surface de résolution.

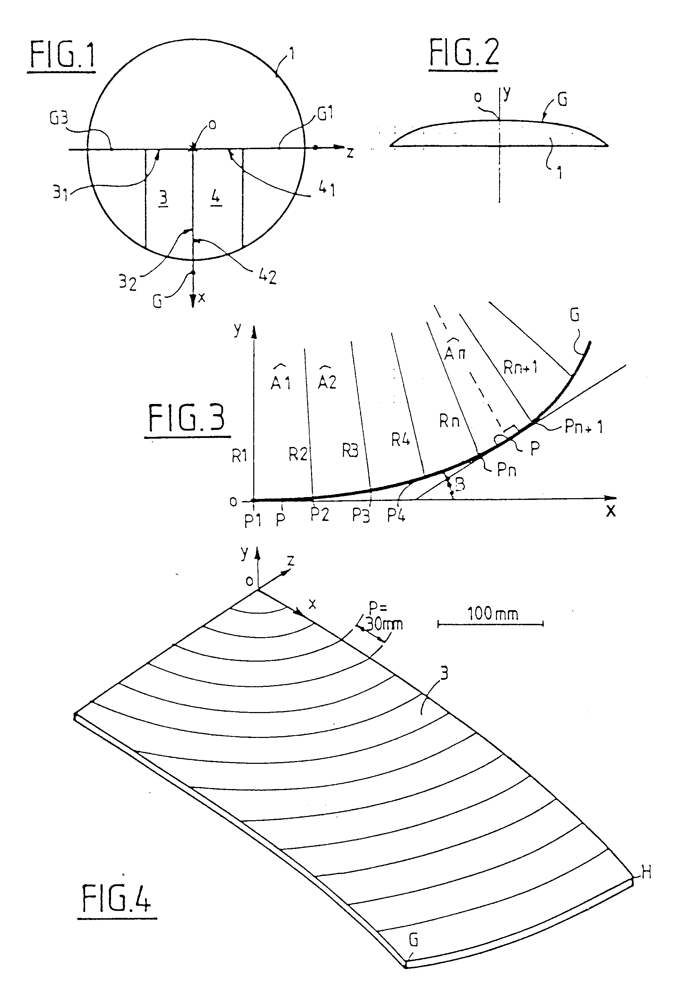

Dans le cas particulier de la figure 1, on a représenté à titre d'exemple des parties $\underline{3}$ et $\underline{4}$ destinées respectivement aux miroirs côté gauche et côté droit de tous les véhicules. Ces parties de miroir sont délimitées exactement sur deux de leurs bords adjacents $3_1$ , $3_2$ , $4_1$ , $4_2$ , par, à chaque fois, deux courbes de génération $G_1$ , $G_2$ , et $G_2$ , $G_3$ qui sont perpendiculaires entre elles et sont donc situées dans les plans perpendiculaires YOX et YOZ.

Cette disposition, dans laquelle les parties du miroir sont délimitées exactement sur deux de leurs bords adjacents par des génératrices perpendiculaires entre elles, constitue le cas limite permettant d'obtenir la meilleure rétrovision.

Suivant une autre caractéristique de l'invention la surface de résolution 1 servant de base à la détermination des miroirs du rétroviseur, est générée par une courbe G (voir figure 2), dont son point 0 dans un mouvement de rotation tourne autour d' un axe OY contenu dans son plan. Cette courbe génération G est établie à partir d'un ensemble n points $P_1$, $P_2$, $P_3$ $P_4$ $P_n$, par lesquels passe une succession d'arcs sous-tendus par des cordes de longueur identique P et dont les rayons de courbure $R_1$, $R_2$, $R_3$, $R_n$, définissent entre eux des angles $A_1$, $A_2$ ... $A_n$, ces rayons de courbure obéissant à la relation :

$$R_n = h \cdot K_n$$

avec h = 2348 mm
et $K_n$ ayant successivement par exemple les valeurs

$$\frac{1}{1,15} , \quad \frac{1}{1,145} , \quad \frac{1}{1,14}$$

Cette relation garantie une diminution du rayon de courbure de 15%, 14,5%, 14 %, ect... quand n s'accroît de 1. Ainsi, si l'on définit la courbe avec des longueurs de corde constante P de 30 mm, on obtiendra par exemple un rayon R de 1564 mm pour une valeur de n = 3.

La relation ci-dessus assure donc la constance de la progression du rayon de courbure depuis le centre 0 de la surface de révolution et vers la périphérie.

La détermination de cette courbure, par exemple pour la réalisation d'un moule, est obtenue en déterminant la position des différents points $P_1$, $P_2$, $P_3$ . $p_n$ dans le représentation coordonnée x, y de la figure 3.

Pour cela, on constate que l'angle B formé par l'axe des x et une droite passant par deux points adjacents tels que $P_n$ et $P_{n+1}$ est égal à :

$$B_n = A_1 + A_2 \cdots + \frac{A_n}{2}$$

L'angle $A_n$ se déterminant par la formule suivante :

$$A_n = 2 \sin^{-1} \left( \frac{P}{2 R_n} \right)$$

Par ailleurs, les variations des coordonnées du point $P_n$ sont les suivantes :

$X_n = P \cos B_n$
$Y_n = P \sin B_n$

Ces relations permettent donc de calculer les coordonnées de l'ensemble des points $P_1$, $P_2$, $P_3$ $P_n$ qui sont chacun distants d'une longueur prédéterminée constante p.

Si la fonction du miroir pour rétroviseur côté passager est d'apporter un angle de vision maximum : le miroir côté conducteur doit réserver une zone à grands rayons de courbure, nécessaire à l'appréciation des distances et vitesses des véhicules suiveurs en passe de doubler, et un angle de vision suffisant, ce qui impose un choix judicieux.

En conséquence : en variant les pourcentages des courbes génératrices, on en module leurs tracés, en fonction de ces critères.

Par exemple, pour le côté conducteur : en régressant 0,001 du coefficient 1,15, on établi un ordre de 17 pourcentages allant de 1,15 à 1,134%.

Pour le côté passager: en régressant 0,005 du coefficient 1,15, on établi un second ordre de 17 pourcentages allant de 1,15 à 1,07%.

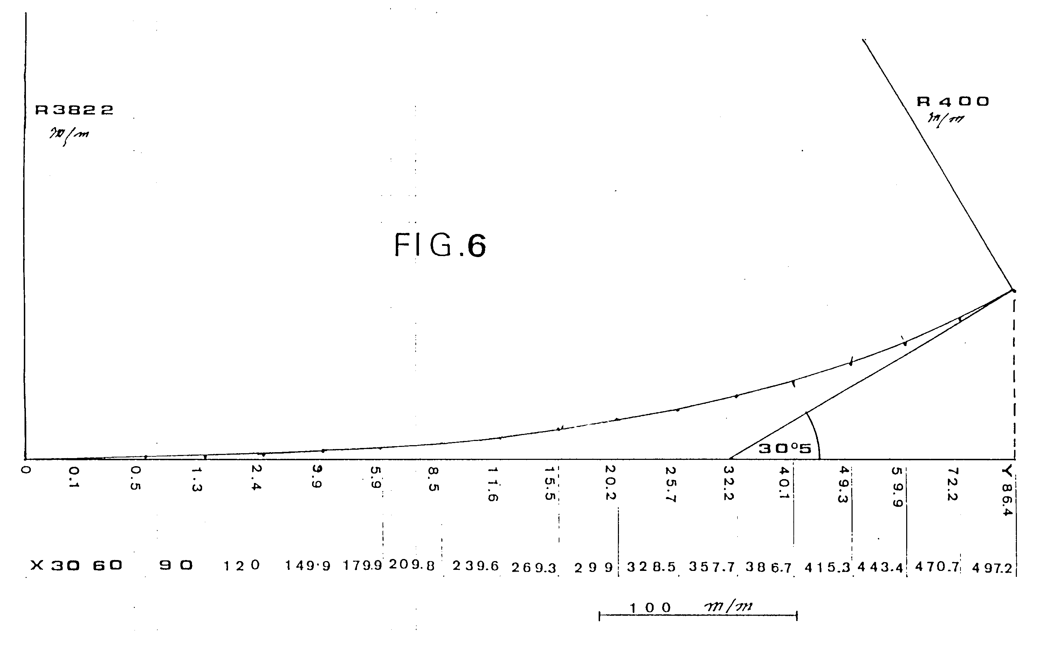

Pour le miroir côté conducteur : en multipliant le rayon de 400 m m par le coefficient 1,15, par exemple 400 x 1,15 = 460 x 1,149 = 529 ...etc on obtient une échelle de 18 rayons allant de 400 à 3822 m m au point 0 contre 2830 du brevet principal qui suivant la formule mathématique décrite, détermine la courbe génératrice (figure 6).

Pour le coté passager : en multipliant le rayon de 400 m m par le coefficient 1,07, par exemple 400 x 1,07 = 428 x 1,075 = 460... etc on obtient une échelle de 18 rayons allant de 400 à 2348 m m au point 0 contre 1500 du brevet principal qui suivant la formule mathématique décrite, détermine la courbe génératrice (figure 8).

Sur la (figure 5) on a représenté à titre d'exemple, les parties 3 et 4 de la surface de révolution 1, la partie 3 étant délimitée par les génératrices G, G3 et la partie 4 étant délimitée par les génératrices G,G1 perpendiculaires entre elles.

Ces parties 3 et 4 sont sur cette figure, pourvue de cercles équidistants d'écartement P = 30 m/m afin d'illustrer la courbure de la surface réfléchissante.

Egalement sur chacun de ces cercles on a indiqué sur la figure 5 la valeur de la première échelle des rayons de courbure $R_1$ , $R_2$ ,... $R_n$ + 1 variant de 3822 m m jusqu'à 400 m m, ainsi que la valeur correspondante des angles $A_1$ , $A_2$ ... $A_n$ variant de O° à 30,5°

Sur la figure 6 représentant la courbe génératrice de la figure 5, on a indiqué les valeurs coordonnées de 0 à 497,2 m m de la projection, sur l'axe du X des différents pas de 30 m m. Ainsi que les valeurs coordonnées de O à 86,4 m m de la projection, sur l'axe du y.

Les différents ces de la courbe de génération G sont obtenus par raccordement en tangence des différents points P.

Dans cette réalisation, le plus petit rayon est choisi égal à 400 m m rayon minimal suivant les directives de la Commission C.E.E soit n = 17 pour P = 30 afin d'englober toutes les classes de rétroviseurs (côté conducteur).

Les parties 3 et 4 ainsi couplées sur la même figure 5 simplifient la description dans le sens que : la partie 3 représente tous les miroirs côté conducteur, de tous les véhicules ayant le poste de conduite à gauche. La partie 4 représentant tous les miroirs côté conducteur, de tous les véhicules ayant le poste de conduite à droite.

De cette manière, la description détaillée des miroirs de la partie 3 est la même que la partie 4 et ne sera par répétée, et permet la supression de 14 figures du brevet principal.

Sur les figures 7 on a représenté à titre d'exemple les parties 3 et 4 de la surface de révolution 1 la partie 3 étant délimitée par les génératrices G, G3 et la partie 4 étant délimitée par les génératrices G, G1 perpendiculaires entre elles.

Ces parties 3 et 4 sont sur cette figure pourvue de cercles équidistants d'écartement P = 30 m m afin d'illustrer la courbure de la surface réfléchissante.

Ces parties 3 et 4 sont sur cette figure pourvue de cercles équidistants d'écartement P = 30 m/m afin d'illustrer la courbure de la surface réfléchissante.

Egalement, pour chacun de ces cercles, on a indiqué sur la figure 7 la valeur de la deuxième échelle des rayons de courbure $R_1$ , $R_2$ , ...$R_n$ + 1 variant de 2348 m/m jusqu'à 400 m/m, la valeur correspondante des angles $A_1$ , $A_2$ , ... $A_n$ variant de 0° à 39,90°.

Sur la figure 8 représentant la courbe génératrice de la figure 7, on a indiqué les valeurs coordonnées de 0 à 438,7 m/m de la projection, sur l'axe du X, des différents pas de 30 m/m ; ainsi que les valeurs coordonnées de 0 à 126,2 m/m de la projection sur l,axe y.

Les différents axes de la courbe de génération G sont obtenus par raccordement en tangence des différents point P.

Dans cette réalisation, le plus petit rayon est choisi égal à 400 m/m soit N17 pour P = 30 afin d'englober toutes les classes de rétroviseurs (côté passager) pour tous les véhicules ayant le poste de conduite soit à droite par la partie 3 soit à gauche par la partie 4.

Sur la figure 5, on a délimité par les lettres de A à H quatre types de rétroviseurs destinés à être disposés du côté du conducteur ayant en commun le premier correspondant aux véhicules de tourisme, aux camionnettes, aux véhicules porteurs avec ou sans remorque, aux véhicules semi-remorques, et aux cars.

Les angles de rétrovision obtenus pour ces différentes catégories de rétroviseurs, sont respectivement représentés sur les côtés gauches des figures 9, 10, 11 et 12.

Dans le cas d'un véhicule de tourisme et pour un rétroviseur de dimensions 180/110 mm défini par les points 0, A, B, C, on obtient, au point B (voir figure 5), un angle de courbure de 5°5, c'est-à-dire un angle de vision supérieur de 11° à l'angle de 11,8° (voir partie gauche de la figure 9) que l'on obtiendrait si le rétroviseur était constitué par un miroir plat de mêmes dimensions.

En outre, l'image réfléchie reste rectiligne dans les dimensions horizontales 0, A, et verticales 0, C, tandis qu'on obtient une meilleure estimation des distances et de la vitesse de déplacement du véhicule suiveur du fait qu'un véhicule qui se rapproche se déplace dans le rétroviseur suivant la diagonale allant de 0 vers B, l'angle B étant le sommet d'une zone relativement importante du miroir à rayons de courbure importante, et l'angle 0 la zone de grands rayons.

Dans le cas d'une camionnette, il convient (voir figure 5) de rajouter 90 mm dans le sens vertical du rétroviseur, afin de former un rectangle 0, A, D, E de 180/200 mm.

Dans ce cas, l'angle de courbure au point D est de 8°2, c'est-à-dire un angle de vision de 16°4 en plus des 11° qui seraient obtenus avec un miroir plat de mêmes dimensions (voir partie gauche de la figure 10).

Dans le cas d'un véhicule porteur avec ou sans remorque, il convient de donner au miroir une largeur de 210 mm, sa longueur dans le sens vertical étant choisie en fonction de la grandeur du véhicule. Par exemple, au point F sur le rayon de 696 mm (voir figure 5), on a un angle $A_1$ de 16,4° soit un angle de rétrovision total de 43°8 en tenant compte de l'angle de rétrovision de 11° que l'on obtiendrait avec un rétroviseur plat de mêmes dimensions (voir partie gauche de la figure 11).

Dans le cas d'un véhicule semi-remorque, il est prévu pour être placé à une hauteur supérieure à 2 m et est constitué par la surface totale du miroir de la figure 5, c'est-à-dire que ses angles inférieurs G et H présentent un rayon de courbure de 400 mm déterminant un angle $A_1$ de 30°5, soit un angle total de rétrovision vertical de 85° compte tenu de l'angle de rétrovision de 24° obtenu par la dimension verticale du miroir (voir le côté gauche de la figure 12). Ce qui permet au chauffeur d'avoir une vision au sol, largement au niveau de la roue avant de son véhicule.

Sur la figure 7, on a délimité par les lettres de i à p quatre types de rétroviseur destiné à être disposés du côté du passager ayant en commun le premier correspondant aux véhicules de tourisme, aux camionnettes, aux véhicules porteurs avec ou sans remorques, aux véhicules semi-remorques, et aux cars.

Les angles de rétrovision obtenus pour ces différentes catégories de rétroviseurs sont respectivement représentés sur les côtés droits des figures 9, 10, 11, 12 et 13.

Dans le cas d'un véhicule de tourisme et pour un rétroviseur de dimensions 180/110 mm défini par les points o, i, j, k, on obtient, au point J (voir figure 7), un angle de courbure de 8°9, c'est à dire un angle de vision supérieur de 17°8 à l'angle de 7° (voir partie gauche de la figure 9) que l'on obtiendrait si le rétroviseur était constitué par un miroir plat de mêmes dimensions.

En outre, l'image régfléchie reste rectiligne dans les dimensions horizontales o, i, et verticales o, k tandis que l'on a une meilleure estimation des distances et de la vitesse de déplacement du véhicule suiveur du fait qu'un véhicule qui se rapproche se déplace dans le rétroviseur suivant la diagonale allant de 0 vers J, l'angle J étant le sommet d'une zone relativement importante du miroir à rayons de courbure importante, et l'angle 0 la zone de grands rayons ; cette dernière n'a de valeur que lorsque les véhicules prévus pour rouler à droite ou à gauche inverse de côté.

Dans le cas d'une camionnette, il convient (voir figure 7) de rajouter 90 mm dans le sens vertical du rétroviseur, afin de former un rectangle 0, i, L, M de 180/200 mm.

Dans ce cas, l'angle de courbure au point L est de 13°1, c'est à dire 26°2 en plus des 7° qui serait obtenus avec un miroir plat de mêmes dimensions (voir partie droite de la figure 10).

Dans le cas d'un véhicule porteur avec ou sans remorque, il convient de donner au miroir une largeur de 210 mm, sa longueur dans le sens vertical étant choisie en fonction de la grandeur du véhicule. Par exemple, au point n sur le rayon de 539 mm (voir figure 7), on a un angle $A_1$ de 24°3 soit un angle de rétrovision total de 54°6 en tenant compte de l'angle de rétrovision de 6° que l'on obtiendrait avec un rétroviseur plat de mêmes dimensions (voir partie droite de la figure 11).

Dans le cas d'un véhicule semi-remorque il est prévu pour être placé à une hauteur supérieure à 2 m et est constitué par la surface totale du miroir de la figure 7, c'est à dire que ses angles inférieurs o et p présentent un rayon de courbure de 400 mm déterminant un angle $A_1$ de 39°9, soit un angle total de rétrovision vertical de 93°0 compte tenu de l'angle de rétrovision de 13°2 obtenu par la dimension de 483,7 mm (voir le côté droit de la figure 12).

Par comparaison pour ce miroir semi-remorque : l'inversion de l'ordre des coefficients aurait pour effet dans le cas contraire ou le coefficient serait modifié par exemple 400 x 1,15 = 460 x 1,145 = 527 ... etc on aboutirait au point 0, au mener rayon de 2348 mm, mais avec un angle de courbure $A_1$ sur le rayon de 400 mm de 32°8 contre 39°9, donc réduit de 7°1, aboutissant à un écart d'angle de vision de 14°2 sachant que l'angle de courbure est à multiplier par 2 : alors que dans le cas présent où le miroir pour les véhicules semi-remorques et cars décrit par les figures 7 et 8, et positionné à 55° du point occulaire du chauffeur (voir figure 13), on se rend compte que son angle de vision important est rabattu au sol verticalement et couvre largement les parties hachurées 5 et 6 imposées par les directives de la C.E.E annulant et remplaçant les fonction des miroirs additionnels des classes dites grand angle pour la partie 6 et d'accostage pour la partie 5, imposés par la réglementation pour couvrir ces parties 5 et 6.

## FABRICATION DE L'EMPREINTE DES MIROIRS

Elle implique de réaliser la forme correspondante en acier, usinée en CAO soit par fraiseuses à troix axes soit au tour à commande numérique, le tour a l'avantage de laisser une meilleure surface de finition dont une face usinée en bombée, l'autre en creux tenant compte du parallélisme de l'épaisseur des verres: de 3 mm on obtient par le découpage perpendiculairement au plan représenté par la figure 1 quatre parties-égales entre elles deux à deux, ce qui permet de produire les miroirs soit par formage entre mâle et femelle par pression ou injection de diverses matières ou en bombage du verre par échauffement.

## POUR LES MIROIRS COTE CONDUCTEUR

Le mise en oeuvre des sphères utiles dans ces cas, sont pour les miroirs voitures légères d'un rayon culminant sur l'arc du point B de la figure 5 équivalent sur la figure 6 à 209,8 mm de la projection de X et de 8,5 mm de la projection de Y.

Dans le cas d'une camionnette : sur l'arc du point D de la figure 5 soit d'un rayon équivalent sur la figure 6 à son X de 269,3 mm et à sont Y de 15,5 mm.

Dans le cas d'un camion : sur l'arc du point F de la figure 5 soit d'un rayon équivalent sur la figure 6 à son X de 386,7 me et à son Y de 40,1 mm.

Dans le cas d'un camion semi-remorque : sur l'arc du point G de la figure 5 soit d'un rayon équivalent sur la figure 6 à son X de 497,2 mm et à son Y de 86,4 mm.

## POUR LES MIROIRS COTE PASSAGER

La mise en oeuvre des sphères utiles dans ces cas sont pour les voitures légères d'un rayon culminant sur l'arc du point J de la figure 7 équivalent sur la figure 8 à 209,3 mm de la projection de X, et à 14 mm de la projection de Y .

Dans le cas d'une camionnette sur l'arc du point L sur la figure 7 soit d'un rayon équivalent sur la figure 8 à son X de 268,2 mm, et à son Y de 25,5 mm.

Dans le cas d'un camion sur l'arc du point N de la figure 7 soit d'un rayon équivalent sur la figure 8 à son X de 381,9 mm, et à son Y de 63,3 mm.

Dans le cas d'un camion semi-remorque sur l'arc des points 0-P de la figure 7 soit d'un rayon équivalent sur la figure 8 à son X de 483,7 mm, et à son Y de 126,2 mm.

Bien entendu, l'invention aux exemples de réalisation décrits et représentés les dimensions des miroirs et la forme de leur pourtour pouvant être adaptés pour tenir compte des réglementations en vigueur ainsi que pour des raisons esthétiques ou de prise de vent. D'une manière générale une variation de 10 % sur les valeurs indiquées pourra être admises si l'on tolère une diminution correspondante des performances.

Il est à noter que les mesures des durances sont arrondis au millimètre et que les degrés le sont au dixième,

En résumé : Les coefficients variables par leurs inversions permettent (outre les avantages déjà cités) de moduler la surface par exemple la miroir côté opposé au poste de conduite a au point 0 un rayon de courbure de 2348 m m.

Cette zone à grands rayons trouve toute son utilité quand les véhicules prévus pour rouler à droite ou à gauche doivent rouler sur les côtés opposés dans quel cas les fonctions spécifiques des miroirs étant inversées, c'est le miroir côté passager qui doit assurer celle du miroir côté conducteur dans ce cas illogique, la zone à grands rayons de courbure décrite plus haut donne une estimation réduite mais encore correcte des distances et vitesses, des véhicules suiveurs et permet principalement sur route à voies multiples un changement de file limitant le risque d' accident.

**Revendications**

1. Rétroviseur de véhicule automobile, disposé du côté conducteur et réalisé par une partie (3,4) d'un miroir constituant une surface de révolution (1), cette partie de miroir étant délimitée à proximité de deux de ses bords adjacents perpendiculaires entre eux par une génératrice (G) de cette surface de révolution, caractérisé en ce que cette génératrice est constituée par une courbe plane, s'établissant à partir d'un ensemble de points par lesquels passe une succession d'arcs distants d'un pas (P) de 30 mm et dont les rayons de courbure obéissent à la relation $R = H.K_n$ avec $H = 3822$ mm et $K_n$ variant de 1/1,15 à 1/1,134, à chaque pas ces valeurs étant admises à 10 % près.

2. Rétroviseur de véhicule automobile, disposé du côté passager et réalisé par une partie (3,4) d'un miroir constituant une surface de révolution (1), cette partie de miroir étant délimitée à proximité de deux de ses bords adjacents perpendiculaires entre eux par une génératrice (G) de cette surface de révolution, caractérisé en ce que cette génératrice est constituée par une courbe plane, s'établissant à partir d'un ensemble de points par lesquels passent une succession d' arcs distants d'un pas (P) de 30 mm et dont les rayons de courbure obéissent à la relation $R = H.K_n$ avec $H = 2348$ mm et $K_n$ variant de 1/1,15 à 1/1,07, à chaque pas ces valeurs étant admises à 10 % près.

3. Rétroviseur selon la revendication 1 ou 2, caractérisé en ce que la surface de révolution 1 servant de base à la détermination des miroirs du rétroviseur est générée par une courbe plane G (figure 2) qui dans un mouvement de rotation tourne autour d'un axe OY contenu dans son plan.

## Claims

1. Car wing mirror, fixed on the driver's side and made up of a part (3,4) of a mirror which constitutes a revolution surface (1), this part of the mirror being delimited near to two of its adjacent and perpendicular edges by a generating line (G) of this revolution surface, this generating line being constituted by a plane curve, made up of a set of points through which goes a succession of arcs, the distance (P) between each arc being 30 mm, and of which the curvature circles follow the relation $R = H.K_n$ with $H = 3822$ mm and $K_n$ changing from 1/1,15 to 1/1,134, these values admitted within about 10% for each distance (P).

2. Car wing mirror, fixed on the passenger's side and made up of a part (3,4) of a mirror which constitutes a revolution surface (1), this part of the mirror being delimited near to two of its adjacent and perpendicular edges by a generating line (G) of this revolution surface, this generating line being constituted by a plane curve, made up of a set of points through which goes a succession of arcs, the distance (P) between each arc being 30 mm, and of which the curvature circles follow the relation $R = H.K_n$ with $H = 2348$ mm and $K_n$ changing from 1/1,15 to 1/1,07, these values admitted within about 10% for each distance (P).

3. Mirror, as per the specification 1 or 2, characterized by the fact that the revolution surface 1 used as a basis for the determination of the mirrors is generated by a plane curve G (pict. 2) which, in a rotating movement, turns around an axis OY contained in its plane.

## Patentansprüche

1. Rückspiegel für Kraftfahrzeuge auf der Fahrerseite, verwirklicht durch einen Teil (3,4) eines Spiegels, der eine Rotationsfläche darstellt (1), dieser Teil des Spiegels wird zum Ende von zwei seiner sich berührenden Seiten, die senkrecht zu einander stehen, abgegrenzt durch eine Generatrix (G) dieser Rotationsfläche, carakterisiert durch die Tatasache, dass diese Generatrix aus einer ebenen Kurve besteht, die sich aus einer Reihe von Punkten zusammensetzt, durch welche eine Folge von Bögen läuft, in einer Schrittweite (P) von 30 mm und mit einem Krümmungsradius der sich auf die Formel $R = H.K_n$ bezieht, wobei $H = 3822$ mm ist und $K_n$ zwischen 1/1,15 und 1/1,134 liegt, bei jedem Schritt können diese Werte bis zu 10% abweichen.

2. Rückspiegel für Kraftfahrzeuge auf der Beifahrerseite, verwirklicht durch einen Teil (3,4) eines Spiegels, der eine Rotationsfläche (1) darstellt, dieser Teil des Spiegels wird zum Ende von zwei seiner sich berührenden Seiten, die senkrecht zu einander stehen, abgegrenzt durch eine Generatrix (G) dieser Rotationsfläche, carakterisiert durch die Tatasache, dass diese Generatrix aus einer ebenen Kurve besteht, die sich aus einer Reihe von Punkten zusammensetzt, durch welche eine Folge von Bögen läuft, in einer Schrittweite (P) von 30 mm und mit einem Krümmungsradius der sich auf die Formel $R = H.K_n$ bezieht, wobei $H = 2348$ mm ist und $K_n$ zwischen 1/1,15 und 1/1,07 liegt, bei jedem Schritt können diese Werte bis zu 10% abweichen.

3. Rückspiegel gemäss der Anspruchserhebung 1 oder 2, dadurch carakterisiert, dass die Rotationsfläche 1, die als Basis für die Bestimmung der Spiegelflächen des Rückspiegels herangezogen wird, durch eine ebene Kurve (G) (Bild 2) erzeugt wird, die sich in einer Rotationsbewegung um die Achse OY dreht.

# FIG.1

# FIG.2

# FIG.3

# FIG.4

FIG.5

FIG.6

R 400 m/m

R 3822 m/m

30°5

100 m/m

| X | 30 60 | 9 0 | 120 | 149·9 | 179.9 | 209.8 | 239.6 | 269.3 | 2 9 9 | 328.5 | 357.7 | 386.7 | 415.3 | 443.4 | 470.7 | 4 97.2 |
|---|---|---|---|---|---|---|---|---|---|---|---|---|---|---|---|---|
| Y | 0 | 0.1 | 0.5 | 1.3 | 2.4 | 3.9 | 5.9 | 8.5 | 11.6 | 15.5 | 20.2 | 25.7 | 32.2 | 40.1 | 49.3 | 5 9.9 | 72.2 | 8 6.4 |

EP 0 435 793 B1

FIG.7

EP 0 435 793 B1

# FIG.8

R 2 3 4 8 *m/m*

R 4 0 0

3 9°9

100 *m/m*

Y: 0   0.2   0.9   2.1   4   6.5   9.9   14   19.2   25.5   32.9   41.6   51.7   63.3   76.5   91.3   107.9   126.2

X: 30   60   90   120   149.8   179.6   209.3   238.9   268.2   297.3   326   354.2   381.9   408.9   434.9   459.9   483.7

# FIG. 9.

5000 m/m

22°8

24°8

11°8

7°

# FIG.10

5000 m/m

27°4

11°

33°2

7°

# FIG. 11

5000 m/m

43°8

54°6

11°

6°

# FIG.12

5000 m/m

58°2

9°

90°

75°

32°

6°

FIG 13